# EUROPÄISCHE PATENTSCHRIFT

(11) **EP 1 485 897 B1**
(45) Veröffentlichungstag und Bekanntmachung des Hinweises auf die Patenterteilung: **25.01.2006**
(21) Anmeldenummer: 02774445.7
(22) Anmeldetag: 09.10.2002
(51) Int. Cl.: G08G 1/09, G08G 1/16, B60K 31/00

(54) **VERFAHREN UND SYSTEM ZUR AUTOMATISCHEN FAHRZEUGFÜHRUNG**
AUTOMATIC VEHICLE GUIDANCE METHOD AND SYSTEM
PROCEDE ET SYSTEME DE GUIDAGE AUTOMATIQUE DE VEHICULE

(30) Priorität: 09.03.2002 DE 10210546
(43) Veröffentlichungstag der Anmeldung: 15.12.2004
(73) Patentinhaber: ROBERT BOSCH GMBH, 70442 Stuttgart (DE)
(72) Erfinder: DIETERLE, Werner, 71254 Ditzingen (DE)
(86) Internationale Anmeldenummer: PCT/DE2002/003806
(87) Internationale Veröffentlichungsnummer: WO 2003/077222

(56) Entgegenhaltungen:
- EP-A- 1 035 531
- WO-A-00/05091
- DE-A- 10 010 436
- DE-A- 19 955 237
- US-B2- 6 347 278

## Beschreibung

Die Erfindung betrifft ein Verfahren zur automatischen Fahrzeugführung, bei dem Infrastrukturdaten drahtlos an das Fahrzeug übermittelt werden und Befehle für die Fahrzeugführung anhand der Infrastrukturdaten berechnet werden, sowie ein System zur Durchführung dieses Verfahrens. Ein Verfahren, bei dem Infrastruckturdaten drahtlas an das Fahrzeug übermittelt werden, ist beispielsweise aus der US 6 347 278 B2 bekannt.

Für Kraftfahrzeuge sind Geschwindigkeitsregelsysteme bekannt, mit denen die Geschwindigkeit des Fahrzeugs auf eine vom Fahrer gewählte Wunschgeschwindigkeit geregelt werden kann. Darüber hinaus kann mit Hilfe eines Abstandssensors, beispielsweise mit Hilfe eines Radar- oder Lidar-Sensors, der Abstand zu einem vorausfahrenden Fahrzeug gemessen werden. Die Geschwindigkeitsregelung wird dann so modifiziert, daß ein vorgegebener, vorzugsweise geschwindigkeitsabhängiger Abstand zu dem als Zielobjekt ausgewählten vorausfahrenden Fahrzeug eingehalten wird. Solche Systeme, die auch als adaptive Geschwindigkeitsregelsysteme oder ACC-Systeme (Adaptive Cruise Control) bezeichnet werden, ermöglichen unter geeigneten Bedingungen eine automatische Längsführung des Fahrzeugs durch Eingriff in das Antriebs- und Bremssystem. Wenn auch eine automatische Querführung des Fahrzeugs durch Eingriff in die Lenkung realisiert werden soll, beispielsweise eine automatische Spurhaltung, werden zusätzlich Daten über die Verkehrsinfrastruktur benötigt, insbesondere Daten über den Verlauf und die Breite der Fahrspur.

Um solche Infrastrukturdaten im Fahrzeug verfügbar zu machen, sind kameragestützte Systeme vorgeschlagen worden, mit denen durch elektronische Bildverarbeitung der Verlauf der Fahrbahn- bzw. Fahrspurgrenzen erfaßt werden kann. Hierzu sind hinreichend deutliche Markierungen auf der Fahrbahn oder am Fahrbahnrand erforderlich. Die Betriebszuverlässigkeit solcher Systeme ließe sich dadurch verbessern, daß zusätzlich zu den bereits heute vorhandenen Fahrbahnmarkierungen ergänzende Markierungen in der Form von Reflektoren auf der Fahrbahn, an den Leitplanken etc. angebracht werden.

In www.path.berkeley.edu/PATH/Research/magnets (September 2001) sowie in R. Kasper/A. Kaiser: "Automatisches koordiniertes Fahren im Rechnerexperiment und Laborversuch" 3. Workshop Mechatronik, FH Brandenburg, sind Verfahren der eingangs genannten Art vorgeschlagen worden, bei denen mit magnetischen Markierungen gearbeitet wird, die von einem am Fahrzeug installierten Magnetsensor erfaßt werden. Die magnetischen Markierungen sind beispielsweise in Abständen von etwa einem Meter auf der Spurmitte in die Fahrbahndecke eingelassen. Durch unterschiedliche Polung der einzelnen Markierungen ist es auch möglich, in begrenztem Umfang digitale Informationen, etwa zur Ankündigung von Kurven, drahtlos an das Fahrzeug zu übermitteln. Die Anbringung der magnetischen Markierungen in der Fahrbahn erfordert jedoch einen sehr hohen Installationsaufwand, und der durch die Markierungen vermittelte Informationsgehalt ist nachträglich nur mit sehr hohem Aufwand wieder veränderbar.

### AUFGABE, LÖSUNG UND VORTEILE DER ERFINDUNG

Aufgabe der Erfindung ist es, ein Verfahren und ein System zur automatischen Fahrzeugführung anzugeben, das sich mit geringerem Installationsaufwand verwirklichen und flexibel an veränderte Gegebenheiten anpassen läßt.

Diese Aufgabe wird durch ein Verfahren nach Anspruch 1 und durch ein System nach Anspruch 6 gelöst.

Diese Aufgabe wird bei einem Verfahren der eingangs under anderem genannten Art dadurch gelöst, daß die Infrastrukturdaten für zumindest einen unmittelbar voraus liegenden Abschnitt der Fahrtstrecke in einen fahrzeugeigenen Speicher geladen werden, daß mit einem Positionierungssystem fortlaufend die aktuelle Position des Fahrzeugs bestimmt wird und daß die Befehle anhand der Positionsdaten und der gespeicherten Infrastrukturdaten berechnet werden.

Bei diesem Verfahren repräsentieren die Infrastrukturdaten eine virtuelle Infrastruktur, die den Verlauf der Fahrbahn bzw. der Fahrspur in einem globalen Koordinatensystem angibt. Mit Hilfe des Positionssystems wird die aktuelle Position des Fahrzeugs in demselben Koordinatensystem bestimmt, so daß die Position des Fahrzeugs zu den Infrastrukturdaten in Beziehung gesetzt werden kann. Auf dieser Grundlage ist es dann möglich, Sollwerte für die verschiedenen Regelkreise des automatischen Fahrzeugführungssystems zu berechnen und der Regelung zugrunde zu legen. Beispielsweise können die Infrastrukturdaten Informationen über den geometrischen Straßenverlauf und die Anzahl und Breiten der einzelnen Richtungsfahrspuren enthalten, so daß für die automatische Spurführung des Fahrzeugs Sollwerte bereitgestellt werden können, die jeweils der Mitte der von dem Fahrzeug befahrenen Spur entsprechen. Da sich aus dem durch die Infrastrukturdaten angegebenen Fahrbahnverlauf auch die Kurvenradien bestimmen lassen, können auch an den Kurvenverlauf angepaßte Sollwerte oder Grenzwerte für die Fahrgeschwindigkeit abgeleitet werden, die die Längsführung des Fahrzeugs im Rahmen eines herkömmlichen ACC-Systems ergänzen.

Ein besonderer Vorteil der Erfindung besteht darin, daß sich die Infrastrukturdaten mit denkbar geringem Aufwand und in äußerst flexibler Weise an veränderte Gegebenheiten anpassen lassen. So kann beispielsweise bei Baustellen den Spurverlegungen oder Spurverengungen durch einfache Änderung der Infrastrukturdaten Rechnung getragen werden. Auf diese Weise kann gerade im Bereich von Baustellen durch eine vollautomatische Querführung oder durch eine den Fahrer lediglich unterstützende Spurhaltehilfe die Verkehrssicherheit beträchtlich erhöht werden.

Vorteilhafte Ausgestaltungen der Erfindung ergeben sich aus den Unteransprüchen.

Das Verfahren läßt vielfältige Erweiterungen zu. Beispielsweise können die Infrastrukturdaten auch Informationen über die Steigung oder das Gefälle der Fahrbahn enthalten, die eine verbesserte Längsführung ermöglichen. Weiterhin können die Infrastrukturdaten auch als virtuelle Verkehrsschilder wirken, indem sie Informationen über Streckenverbote wie Geschwindigkeitsbeschränkungen, Überholverbote und dergleichen oder Hinweise auf besondere Gefahrenstellen enthalten. Diese Informationen können durch das automatische Fahrzeugführungssystem entweder direkt umgesetzt werden, beispielsweise durch automatische Herabsetzung der Sollgeschwindigkeit bei Geschwindigkeitsbeschränkungen oder Gefahrenhinweisen, durch automatisches Sperren eines gegebenenfalls im Fahrzeug implementierten automatischen Überholalgorithmus bei Überholverboten (z. B. für LKW auf Autobahnen) und dergleichen, oder sie können durch synthetische Sprachausgabe dem Fahrer mitgeteilt werden.

Die Infrastrukturdaten werden von einem zentralen Server oder von dezentral von über das Straßennetz verteilten Servern bereitgestellt und vor Beginn der automatischen Fahrzeugführung über eine Funkverbindung in den Speicher des Fahrzeugs geladen. Bei der Funkverbindung kann es sich z. B. um eine Mobilfunkverbindung wie GSM oder UMTS handeln, oder um eine Rundfunkverbindung wie etwa DAB, DMB und dergleichen. Anhand der vom Positionssystem bereitgestellten Positionsdaten werden dann aus den gespeicherten Infrastrukturdaten diejenigen Daten ausgewählt, die für die Bestimmung der aktuell gültigen Sollwerte relevant sind. Zugleich liefern die Positionsdaten die Istwerte für die Querführung, also beispielsweise die aktuelle Abweichung des Fahrzeugs von der Spurmitte. Durch Soll/Ist-Vergleich kann dann entweder unmittelbar ein entsprechender Steuerbefehl für das Lenkungssystem erzeugt oder ein Hinweis an den Fahrer ausgegeben werden, der ihn auf die Notwendigkeit eines Lenkeingriffs aufmerksam macht.

Für einen hinreichend präzisen Soll/Ist-Vergleich ist eine Auflösung des Positionierungssytems in der Größenordnung von einigen dm oder besser erforderlich, die mit dem herkömmlichen GPS-System noch nicht erreichbar ist. Es sind jedoch Positionssysteme wie z. B. DGPS oder GALILEO in Planung oder schon im Aufbau, mit denen die geforderte Auflösung erreicht wird. Generell kann es sich bei dem Positionierungssystem um ein satellitengestütztes System oder wahlweise auch um ein System auf der Basis von terrestrischen Funkstationen, z. B. Mobilfunk-Basisstationen handeln.

Die Erfindung ist besonders vorteilhaft in Kombination mit einem Navigationssystem. In diesem Fall kann das für das erfindungsgemäße Verfahren erforderliche präzise Positionssystem auch vom Navigationssystem genutzt werden. Umgekehrt können die akustischen und graphischen Ausgabemittel des Navigationssystems vom Fahrzeugführungssystem genutzt werden. Weiterhin bietet die Vorausberechnung der Fahrtstrecke durch das Navigationssystem die Möglichkeit, gezielt die Infrastrukturdaten für diese Fahrtstrecke oder den nächsten Abschnitt dieser Fahrstrecke herunterzuladen.

Falls kein Navigationssystem vorhanden ist oder für den Fall, daß der Fahrer das Navigationssystem nicht benutzt, da ihm die Fahrtstrecke bekannt ist, sollte zweckmäßig ein Modus vorgesehen sein, in dem automatisch die Infrastrukturdaten für die aktuelle Umgebung des Fahrzeugs in den fahrzeugeigenen Speicher geladen werden. Die Auswahl dieser Umgebung ist vorzugsweise fahrtrichtungsabhängig und umfaßt beispielsweise die Daten für die derzeit befahrene Straße bis zur nächsten Abbiegemöglichkeit sowie die Daten für die Anfangsabschnitte sämtlicher Straßen, die von dieser Abbiegemöglichkeit aus befahren werden könnten. Wenn das Fahrzeug die nächste Abbiegemöglichkeit erreicht und der Fahrer sich für eine der möglichen Routen entscheidet, besteht dann noch hinreichend Zeit, die Infrastrukturdaten für die nächste Fahrzeugumgebung herunterzuladen. Auf diese Weise läßt sich eine lückenlose Bereitstellung der benötigten Infrastrukturdaten auch dann sicherstellen, wenn dem System das Fahrtziel nicht bekannt ist.

Für den Fall, daß eine Funkverbindung zum Server nicht rechtzeitig aufgebaut werden kann, um die benötigten Infrastrukturdaten herunterzuladen, sollten geeignete Sicherungsvorkehrungen vorgesehen sein, beispielsweise die automatische Einleitung eines Nothaltes des Fahrzeugs oder eine Selbstabschaltung des Fahrzeugführungssystems, verbunden mit einer Übernahmeaufforderung an den Fahrer.

Für das Laden der benötigten Informationen in den fahrzeugeigenen Speicher ist auch ein Mischmodus denkbar, bei dem die essentiellen Informationen, die für die Fahrzeugführung zwingend erforderlich sind, für die gesamte Strecke oder für einen längeren Streckenabschnitt geladen werden, während weniger wichtige ergänzende Informationen, beispielsweise Steigung oder Gefälle, Stauwarnungen, Umleitungsempfehlungen und dergleichen nur bei Bedarf oder bei Gelegenheit geladen werden. In diesem Fall läßt sich, ohne daß die Gefahr einer Überlastung des Funknetzes droht, das Angebot an weniger essentiellen Informationen beträchtlich ausweiten, beispielsweise auf Informationen über Serviceangebote wie Tankstellen, Parkplätze und dergleichen, touristische Informationen oder auch Informationen über kommerzielle Angebote, woraus sich auch die Möglichkeit ergibt, das System zumindest teilweise über Werbung zu finanzieren. In diesem Zusammenhang ist es auch möglich, die Informationen nach Prioritäten zu gewichten, so daß die essentiellen Informationen mit Priorität übermittelt werden, während ergänzende Informationen nur dann übermittelt werden, wenn die Übertragungskapazität des Funknetzes dies zuläßt.

Gemäß einer Ausführungsform der Erfindung ist es auch möglich, für die Funkverbindung zwischen dem Fahrzeug und dem Server spezielle Funkbaken vorzusehen, die in größeren Abständen am Straßennetz installiert werden. Hierdurch ersteht zwar ein etwas größerer Installationsaufwand als bei der Nutzung eines öffentlichen Mobilfunknetzes, doch bietet diese Lösung eine größere Übertragungskapazität, und sie erleichtert es, die Infrastrukturdaten durch stärker ortsbezogene Informationen zu ergänzen. Beispielsweise wäre es denkbar, Informationen über den aktuellen Straßenzustand (Nässe, Glatteis) automatisch zu erfassen und über die Funkbake für den betreffenden Streckenabschnitt zu übermitteln. Auf diese Weise könnte z. B. auch eine nur bei Nässe gültige Geschwindigkeitsbeschränkung automatisch umgesetzt werden. Im Prinzip ist dies allerdings auch möglich, wenn die Infrastrukturdaten in einem zentralen Server dynamisch aktualisiert werden.

Darüber hinaus bietet es sich an, die für das erfindungsgemäße Verfahren benötigten Funkverbindungen und Server auch im Rahmen eines Verkehrsleitsystems zu nutzen. Ebenso kann die Funkverbindung auch dazu benutzt werden, Informationen wie Staumeldungen, Glatteiswarnungen oder Unfallmeldungen zusammen mit der ohnehin im System verfügbaren Ortsinformation vom Fahrzeug an den Server zu übermitteln, so daß Hilferufe, Warnungen an andere Verkehrsteilnehmer und dergleichen in kürzester Zeit weitergeleitet werden könnten.

### KURZBESCHREIBUNG DER ZEICHNUNGEN

Im folgenden werden Ausführungsbeispiele der Erfindung anhand der Zeichnungen näher erläutert.

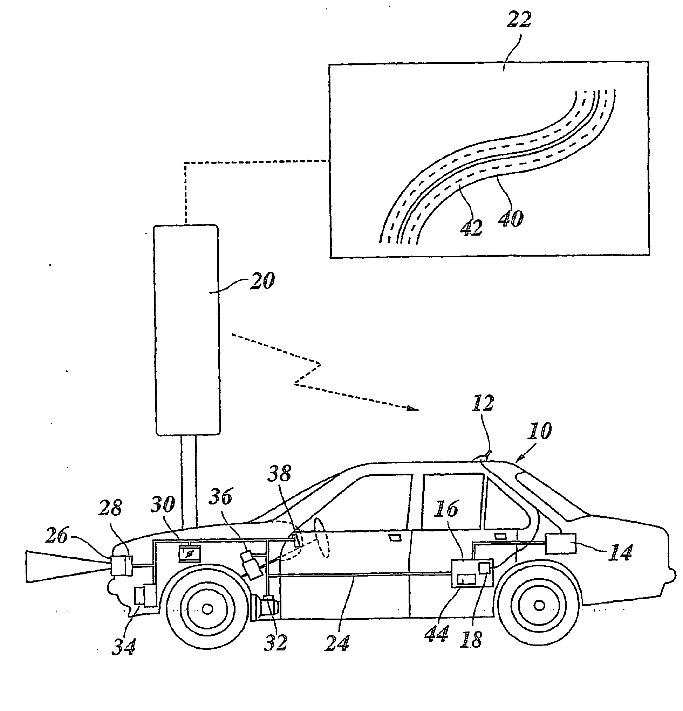

Die einzige Zeichnungsfigur zeigt
ein Blockdiagramm der wesentlichen Komponenten eines Systems zur Durchführung des erfindungsgemäßen Verfahrens.

### BESCHREIBUNG VON AUFÜHRUNGSBEISPIELEN

Ein Kraftfahrzeug 10 weist eine Antenne 12, ein Positionssystem 14, beispielsweise einen DGPS-Empfänger, und eine Führungseinheit 16 auf, die durch einen Mikrocomputer oder ein anderes elektronisches Datenverarbeitungssystem gebildet wird. Die Antenne 12 kann eine Mehrzweckantenne sein, die einerseits mit dem Positionssystem 14 und andererseits mit einer Mobilfunkschnittstelle 18 der Führungseinheit 16 verbunden ist. Das Positionssystem 14 empfängt über die Antenne 12 Satellitensignale für eine hochpräzise Satellitennavigation mit einer räumlichen Auflösung von wenigstens einigen dm. Die Führungseinheit kommuniziert über die Mobilfunkschnittstelle 18 und die Antenne 12 und ein Mobilfunknetz 20, das hier durch eine Funkbake symbolisiert wird, mit einem Server 22, in dem Verkehrsinfrastrukturdaten über das Straßennetz zumindest für die Region gespeichert sind, in der sich das Fahrzeug 10 aufhält.

Weiterhin ist die Führungseinheit 16 über einen Datenbus (z. B. einen CAN-Bus) mit dem Positionssystem 14 sowie mit weiteren Systemkomponenten des Fahrzeugs 10 verbunden. Im gezeigten Beispiel umfassen diese Systemkomponenten einen an der Frontpartie des Kraftfahrzeugs angebrachten Radarsensor 26 mit einer ACC-Steuereinheit 28, eine elektronische Antriebs-Steuereinheit 30, eine Getriebe-Steuereinheit 32, eine Bremssystem-Steuereinheit 34, eine Lenkungs-Steuereinheit 36 sowie eine Bedienungseinheit 38.

Der Radarsensor 26 mißt mit Hilfe eines Mehrstrahlradars die Abstände, Relativgeschwindigkeiten und Azimutwinkel von vor dem Fahrzeug befindlichen Objekten, die Radarwellen reflektieren. Die in regelmäßigen Zeitabständen, z. B. alle 10 ms empfangenen Rohdaten werden in der ACC-Steuereinheit 28 ausgewertet, um einzelne Objekte zu identifizieren und zu verfolgen und um insbesondere ein unmittelbar auf der eigenen Fahrspur vorausfahrendes Fahrzeug zu erkennen und als Zielobjekt auszuwählen. Durch Befehle an die Antriebs-Steuereinheit 30 und die Bremssystem-Steuereinheit 34 sowie, bei Fahrzeugen mit Automatikgetriebe, an die Getriebe-Steuereinheit 32 regelt die ACC-Steuereinheit 26 die Geschwindigkeit des Fahrzeugs 10. Die Bedienungseinheit 38 umfaßt verschiedene Bedienungs- und Anzeigeelemente auf dem Armaturenbrett des Fahrzeugs und dient unter anderem dazu, Bedienbefehle des Fahrers an die ACC-Steuereinheit 28 oder die Führungseinheit 16 zu übermitteln und Meldungen dieser Einheiten an den Fahrer auszugeben. Zu diesem Zweck kann die Bedienungseinheit auch einen Lautsprecherausgang für akustische Signale oder synthetische Sprache aufweisen. Vorzugsweise umfaßt die Bedienungseinheit 38 auch ein Navigationssystem, das auf die vom Positionssystem 14 gelieferten Positionssignale zugreift.

Wenn kein vorausfahrendes Fahrzeug geortet wird, regelt die ACC-Steuereinheit 28 die Geschwindigkeit des Fahrzeugs 10 auf eine vom Fahrer gewählte Wunschgeschwindigkeit. Ist dagegen ein vorausfahrendes Fahrzeug, dessen Geschwindigkeit kleiner ist als die des eigenen Fahrzeugs, als Zielobjekt erfaßt worden, so wird die Geschwindigkeit des Fahrzeugs 10 so geregelt, daß ein angemessener Abstand zu dem vorausfahrenden Fahrzeug eingehalten wird.

Der Aufbau und die Arbeitsweise eines solchen ACC-Systems werden beispielsweise beschrieben in Winner: "Adaptive Cruise Control " in Automotive Electronics Handbook, Ronald K. Jurgen (Hrsg.), 2. Auflage, Mac Graw-Hill (1999) Kapitel 30.1.

Das oben beschriebene ACC-System ist als autonomes System betreibbar und wird in diesem Fall direkt vom Fahrer über die Bedienungseinheit 38 bedient.
Bei dem hier beschriebenen Beispiel stellt das ACC-System jedoch zugleich ein Teilsystem im Rahmen einer automatischen Fahrzeugführung dar, die durch die Führungseinheit 16 kontrolliert wird. Wenn diese automatische Fahrzeugführung in Betrieb ist, wird die Längsführung des Fahrzeugs, also die Regelung der Geschwindigkeit, von der Führungseinheit 16 übernommen. Ebenso sorgt dann die Führungseinheit 16 durch Eingriff in das Lenkungssystem auch für eine automatische Querführung des Fahrzeugs.

Wenn die automatische Fahrzeugführung aktiviert wird, so wird zunächst mit Hilfe des Positionssystems 14 die aktuelle Fahrzeugposition bestimmt. Über die Mobilfunkschnittstelle 18 nimmt die Führungseinheit 16 dann Kontakt zum Server 22 auf, um Infrastrukturdaten über die vor dem Fahrzeug liegende Strecke aus dem Server abzurufen. Wie in der Zeichnung symbolisch dargestellt ist, umfassen diese Infrastrukturdaten insbesondere den Verlauf der von dem Fahrzeug befahrenen Fahrbahn 40 und die Anzahl der Fahrspuren 42 dieser Fahrbahn in der betreffenden Fahrtrichtung sowie die Breite dieser Fahrspuren. Weiterhin können die Infrastrukturdaten die Fahrbahnsteigung oder das Gefälle, Geschwindigkeitsbeschränkungen und sonstige Informationen enthalten, die für die Fahrzeugführung ergänzend herangezogen werden können und/oder dem Fahrer des Fahrzeugs 10 verfügbar gemacht werden sollen. Über das Mobilfunknetz werden diese Daten in einen internen Speicher 44 der Führungseinheit 16 geladen.

Sobald der Ladevorgang abgeschlossen ist, kann die Führungseinheit 16 den automatischen Führungsbetrieb aufnehmen. Im Rahmen dieses Führungsbetriebs bestimmt die Führungseinheit 16 anhand der nun im Speicher 44 gespeicherten Daten über den Verlauf der Fahrbahn 40 die Fahrbahnkrümmung, und sie greift erforderlichenfalls in die Geschwindigkeitsregelung ein, um zu verhindern, daß eine Kurve mit zu hoher Geschwindigkeit durchfahren wird. Der Eingriff kann beispielsweise dadurch erfolgen, daß der von der ACC-Steuereinheit 28 als Sollgeschwindigkeit ausgegebene Geschwindigkeitswert auf einen von der Führungseinheit 16 bestimmten Wert begrenzt wird. Ein entsprechender Eingriff findet auch dann statt, wenn sich aus den Infrastrukturdaten ergibt, daß für die befahrene Strecke eine Geschwindigkeitsbeschränkung gilt. Sofern die Infrastrukturdaten keine Begrenzung der Fahrgeschwindigkeit erforderlich machen, übergibt die Führungseinheit 16 die Kontrolle an die ACC-Steuereinheit 28, so daß die Geschwindigkeit wieder auf die vom Fahrer gewählte Wunschgeschwindigkeit oder auf den Abstand zum vorausfahrenden Fahrzeug geregelt wird.

Sofern die Infrastrukturdaten Informationen über die Fahrbahnsteigung oder das Gefälle enthalten, werden diese Informationen an die ACC-Steuereinheit 28 oder direkt an die Antriebs-Steuereinheit 30 und die Brems-Steuereinheit 34 weitergegeben, so daß die Fahrbahnsteigung bei dem Eingriff in das Antriebs- oder Bremssystem angemessen berücksichtigt werden kann.

Im Rahmen der Querführung des Fahrzeugs ermittelt die Führungseinheit 16 anhand der vom Positionssystem 14 gelieferten Positionsdaten und anhand der im Speicher 44 gespeicherten Infrastrukturdaten fortlaufend die Abweichung der aktuellen Fahrzeugposition von der Mitte der befahrenen Fahrspur. Wenn diese Abweichung außerhalb bestimmter Toleranzgrenzen liegt, veranlaßt die Führungseinheit 16 über die Lenkungs-Steuereinheit 36 einen Eingriff in das Lenkungssystem, so daß das Fahrzeug auf der Spurmitte gehalten wird.

Die maßgeblichen Toleranzgrenzen können ihrerseits dynamisch an die jeweilige Spurbreite angepaßt werden, die sich aus den Infrastrukturdaten ergibt. So werden beispielsweise bei einer Spurverengung im Bereich einer Baustelle entsprechend engere Toleranzgrenzen gewählt werden. Da die Infrastrukturdaten erst bei oder nach Fahrtantritt in den Speicher 44 geladen werden, sind sie stets aktuell, so daß sie die aktuellen Verhältnisse im Bereich der Baustelle wiedergeben, sofern die im Server 22 gespeicherten Daten durch die zuständigen Behörden auf dem neuesten Stand gehalten werden.

Wenn keine aktuellen Daten im Server verfügbar sind, beispielsweise während der Einrichtung einer neuen Baustelle, so enthalten die Infrastrukturdaten einen entsprechenden Hinweis, und das Querführungssystem schaltet sich rechtzeitig vor Einfahrt in die Baustelle ab. Gleichzeitig wird der Fahrer aufgefordert, selbst die Querführung des Fahrzeugs zu übernehmen.

Wenn die Toleranzgrenzen eine gewisse Abweichung von der Spurmitte zulassen, kann die Führungseinheit 16 anhand des Fahrbahnverlaufes auch eine im Hinblick auf die Fahrdynamik optimierte "Ideallinie" berechnen, so daß durch Regelung auf diese Ideallinie statt auf die Spurmitte eine Steigerung des Komforts erreicht wird.

Bei Annäherung an ein langsameres vorausfahrendes Fahrzeug wird normalerweise die ACC-Steuereinheit 28 eine Verzögerung des Fahrzeugs 10 veranlassen. Wahlweise kann jedoch, schon bevor diese Verzögerung einsetzt, über die Bedienungseinheit 38 eine Anfrage an den Fahrer ausgegeben werden, ob er einen Überholvergang wünscht. Wenn der Fahrer sich vergewissert hat, daß die Nebenspur frei ist, und einen Überholbefehl eingibt, kann dann die Führungseinheit 16 einen automatischen Spurwechsel veranlassen, indem die Spurmitte der Nebenspur als neuer Sollwert für die Querführung zugrunde gelegt wird.

Die vom Positionssystem 14 mit hoher Genauigkeit ermittelten Positionsdaten können nicht nur für die Querführung des Fahrzeugs genutzt werden, sondern auch im Rahmen der Längsführung herangezogen werden. Beispielsweise ist es möglich, anhand der Positionsdaten den Geschwindigkeitsmesser des Fahrzeugs zu überwachen und erforderlichenfalls nachzueichen.

Das beschriebene System ist in vielerlei Hinsicht erweiterungsfähig. Beispielsweise kann die Kommunikation zwischen der Führungseinheit 16 und dem Server 22 über das Mobilfunknetz 20 auch für andere Zwecke genutzt werden, etwa für Staumeldungen an den Server, die einfach durch einen Tastendruck des Fahrers bewirkt werden können, oder - bei mautpflichtigen Straßen - für eine automatische Mautabrechnung. Wenn weitere Systemkomponenten hinzugefügt werden, etwa ein Rückraumradar oder ein Rundumradar, läßt sich die automatische Fahrzeugführung auch auf die automatische Einleitung von Überholvorgängen oder sonstigen Spurwechseln erweitern. Sofern ein Hinderniserkennungssystem vorhanden ist, etwa auf der Basis einer Videokamera, das auch die Erfassung von Personen auf der Fahrbahn oder am Fahrbahnrand ermöglicht, ist auch eine Ausweitung der automatischen Fahrzeugführung auf den Stadtverkehr denkbar. Wenn Infrastrukturdaten auch mit Hilfe eines Kamera- und Bildverarbeitungssystems erfaßt werden, lassen sich diese Daten mit den in den Speicher 44 geladenen Daten verknüpfen, so daß die Bildverarbeitungsprozeduren vereinfacht und beschleunigt werden können und die Funktionszuverlässigkeit gesteigert wird. Durch fortlaufende Aktualisierung der im Speicher 44 gespeicherten Infrastrukturdaten können auch zeitlich veränderliche Parameter wie Ampelzustände und dergleichen erfaßt werden, so daß eine automatische Anpassung der Geschwindigkeit an eine "grüne Welle" oder, sofern das ACC-System eine Stop & Go Funktion aufweist, das automatische Anhalten an einer roten Ampel ermöglicht werden. Ebenso ist eine automatische Herabsetzung der Geschwindigkeit und eine Warnung an den Fahrer bei Annäherung an eine Kreuzung oder Einmündung auf nicht vorfahrtberechtigten Straßen möglich.

Andererseits ist die Erfindung nicht auf Anwendungen im Rahmen einer automatischen Fahrzeugführung im eigentlichen Sinne beschränkt, sondern sie ist auch nützlich in den Fällen, in denen die Längs- und insbesondere Querführung des Fahrzeugs dem Fahrer überlassen bleibt und der Fahrer lediglich unterstützende Hinweise erhalten soll.

## Patentansprüche

1. Verfahren zur automatischen. Fahrzeugführung, bei dem Infrastrukturdaten drahtlos an das Fahrzeug (10) übermittelt werden und Befehle für die Fahrzeugführung anhand der Infrastrukturdaten berechnet werden, wobei die Infrastrukturdaten für zumindest einen unmittelbar voraus liegenden Abschnitt der Fahrtstrecke (40) in einen fahrzeugeigenen Speicher (44) geladen werden, mit einem Positionierungssystem (14) fortlaufend die aktuelle Position des Fahrzeugs (10) bestimmt wird und die Befehle anhand der vom Positionierungssystem (14) gelieferten Positionsdaten und der gespeicherten Infrastrukturdaten berechnet werden **dadurch gekennzeichnet, daß** eine Lenkungs-Steuereinheit (36) derart in das Lenkungssystem des Fahrzeugs eingreift, daß das Fahrzeug auf der Spurmitte gehalten wird.

2. Verfahren nach Anspruch 1, **dadurch gekennzeichnet, daß** die Infrastrukturdaten in einem Server (22) bereitgestellt und über ein Funknetz, beispielsweise ein Mobilfunknetz, in den Speicher (44) des Fahrzeugs übermittelt werden.

3. Verfahren nach Anspruch 1 oder 2, **dadurch gekennzeichnet, daß** die Infrastrukturdaten für die gesamte Fahrtstrecke bei Antritt der Fahrt in den Speicher (44) geladen werden.

4. Verfahren nach Anspruch 1 oder 2, **dadurch gekennzeichnet, daß** jeweils nur die Infrastrukturdaten für einen unmittelbar voraus liegenden Abschnitt der Fahrtstrecke in den Speicher (44) geladen werden und daß die Infrastrukturdaten für den nächsten Abschnitt automatisch geladen werden, sobald das Ende des ersten Abschnitts erreicht wird.

5. Verfahren nach einem der vorstehenden Ansprüche, **dadurch gekennzeichnet, daß** die Infrastrukturdaten neben Daten, die den Verlauf der Fahrbahn (40) repräsentieren, auch Daten umfassen, die Streckenverbote und/oder Hinweise auf Gefahrenstellen beinhalten.

6. System zur automatischen Fahrzeugführung, mit einer elektronischen Führungseinheit (16), die in das Antriebs- und Lenkungssystem (30, 36) des Fahrzeugs (10) eingreift, wobei die Führungseinheit (16) mit einem Positionierungssystem (14) zur Bestimmung der Position des Fahrzeugs (10) sowie über ein Funknetz (20) mit einem Server (22) kommuniziert und dazu ausgebildet ist, Infrastrukturdaten über die befahrene Fahrtstrecke in einen Speicher (44) zu laden und Steuerbefehle für das Antriebs- und Lenkungssystem (30, 36) anhand der vom Positionierungssystem (44) gelieferten Positionsdaten und der gespeicherten Infrastrukturdaten zu berechnen, **dadurch gekennzeichnet, daß** eine Lenkungs-Steuereinheit (36) derart in das Lenkungssystem des Fahrzeugs eingreift, daß das Fahrzeug auf der Spurmitte gehalten wird.

7. System nach Anspruch 6, **dadurch gekennzeichnet, daß** die Führungseinheit (16) mit einem Navigationssystem kombiniert ist, das auf die Positionsdaten des Positionierungssystems (14) zugreift.

8. Verfahren nach Anspruch 1, **dadurch gekennzeichnet, dass** die Infrastrukturdaten bezüglich der Fahrbahnsteigung oder des Fahrbahngefälles bei dem Eingriff in das Antriebs- oder Bremssystem berücksichtigt werden.

9. System nach Anspruch 6, **dadurch gekennzeichnet dass** der Antriebs-Steuereinheit (30) und der Brems-Steuereinheit (34) Infrastrukturdaten über die Fahrbahnsteigung oder das Fahrbahngefälle zuführbar sind und diese beim Eingriff in das Antriebs- oder Bremssystem berücksichtigt werden.

## Claims

1. Automatic vehicle guidance method, in which infrastructure data is transmitted in a wirefree fashion to the vehicle (10) and commands for the guidance of the vehicle are calculated by means of the infrastructure data, wherein the infrastructure data for at least one section of the route (40) lying directly ahead is loaded into a vehicle-specific memory (44), the current position of the vehicle (10) is continuously determined using a positioning system (14), and the commands are calculated by means of the position data supplied by the positioning system (14) and the stored infrastructure data, **characterized in that** a steering control unit (36) intervenes in the steering system of the vehicle in such a way that the vehicle is kept in the centre of the lane.

2. Method according to Claim 1, **characterized in that** the infrastructure data is made available in a server (22) and is transmitted into the memory (44) of the vehicle via a radio network, for example a mobile telephone network.

3. Method according to Claim 1 or 2, **characterized in that** the infrastructure data for the entire route is loaded into the memory (44) when the journey is started.

4. Method according to Claim 1 or 2, **characterized in that** in each case only the infrastructure data for a section of the route lying directly ahead is loaded into the memory (44), and **in that** the infrastructure data for the next section is automatically loaded as soon as the end of the first section is reached.

5. Method according to one of the preceding claims, **characterized in that** the infrastructure data includes not only data which represents the course of the carriageway (40) but also data which includes route prohibitions and/or indications of hazardous locations.

6. Automatic vehicle guidance system, having an electronic control unit (16) which intervenes in the drive system (30) and steering system (36) of the vehicle (10), wherein the control unit (16) communicates with a positioning system (14) for determining the position of the vehicle (10) and with a server (22) via a radio network (20), and is designed to load infrastructure data over the route being travelled on into a memory (44) and to calculate control commands for the drive system (30) and steering system (36) by means of the position data supplied by the positioning system (44) and the stored infrastructure data, **characterized in that** a steering control unit (36) intervenes in the steering system of the vehicle in such a way that the vehicle is kept in the centre of the lane.

7. System according to Claim 6, **characterized in that** the control unit (16) is combined with a navigation system which accesses the position data of the positioning system (14).

8. Method according to Claim 1, **characterized in that** the infrastructure data relating to the positive gradient of the carriageway or the negative gradient of the carriageway is taken into account in the intervention in the drive system or brake system.

9. System according to Claim 6, **characterized in that** infrastructure data relating to the positive gradient of the carriageway or the negative gradient of the carriageway can be supplied to the drive control unit (30) and the brake control unit (34) and said data is taken into account in the intervention in the drive system or brake system.

## Revendications

1. Procédé de guidage automatique d'un véhicule selon lequel des données de l'infrastructure sont transmises au véhicule (10) par une liaison sans fil et des ordres de guidage du véhicule sont calculés à partir des données de l'infrastructure,
qui, pour au moins un segment de trajet (40) situé directement en amont, sont chargées dans une mémoire (44) propre au véhicule,
un système de positionnement (14) déterminant en continu la position actuelle du véhicule (10) et les ordres étant calculés à l'aide des données de position fournies par le système de positionnement (14) et des données d'infrastructure mises en mémoire,
**caractérisé en ce qu'**
une unité de commande de direction (36) intervient dans le système de direction du véhicule pour maintenir le véhicule au milieu de la voie.

2. Procédé selon la revendication 1,
**caractérisé en ce que**
les données d'infrastructure sont disponibles dans un serveur (22) et sont transmises à la mémoire (44) du véhicule par un réseau radio par exemple un réseau de téléphone mobile.

3. Procédé selon la revendication 1 ou 2,
**caractérisé en ce que**
les données d'infrastructure de l'ensemble du trajet sont chargées dans la mémoire (4) au début de la course.

4. Procédé selon la revendication 1 ou 2,
**caractérisé en ce que**
seules les données d'infrastructure correspondant au segment de trajet situé directement en amont sont chargées dans la mémoire (44), et les données d'infrastructure du segment suivant sont chargées automatiquement dès que l'on atteint la fin du premier segment.

5. Procédé selon l'une des revendications précédentes,
**caractérisé en ce que**
les données d'infrastructure contiennent non seulement les données qui représentent le trajet (40) mais également les données concernant les trajets interdits et/ou les indications relatives à des points dangereux.

6. Système de guidage automatique de véhicule comprenant une unité de guidage électronique (16) qui intervient sur le système d'entraînement et de direction (30, 36) du véhicule (10), l'unité de guidage (16) communiquant avec un système de positionnement (14) pour déterminer la position du véhicule (10) ainsi que par un réseau radio (20) avec un serveur (22) et étant réalisée pour charger les données d'infrastructure concernant le trajet parcouru dans une mémoire (44) et calculer les ordres destinés au système d'entraînement et de guidage (30, 36) à l'aide des données de position fournies par le système de positionnement (44) et à l'aide des données d'infrastructure en mémoire,
**caractérisé en ce qu'**
une unité de commande de direction (36) intervient dans le système de direction pour que le véhicule soit maintenu au milieu de la voie.

7. Système selon la revendication 6,
**caractérisé en ce que**
l'unité de guidage (16) est combinée à un système de navigation qui utilise les données de position du système de positionnement (14).

8. Procédé selon la revendication 1,
**caractérisé en ce que** l'action sur le système d'entraînement ou de freinage tient compte des données d'infrastructure relatives à la pente ascendante ou descendante de la chaussée.

9. Procédé selon la revendication 6,
**caractérisé en ce que**
l'unité de commande d'entraînement (30) du véhicule et l'unité de commande de frein (34) reçoivent des données d'infrastructure concernant la pente ascendante ou descendante de la chaussée et en tiennent compte dans leur action sur le système d'entraînement ou de frein.
